# EUROPÄISCHE PATENTSCHRIFT

(11) **EP 1 302 418 B1**
(45) Veröffentlichungstag und Bekanntmachung des Hinweises auf die Patenterteilung: **28.09.2005**
(21) Anmeldenummer: 02405657.4
(22) Anmeldetag: 29.07.2002
(51) Int. Cl.: B65G 47/51, B65H 39/06

(54) **Verfahren und Vorrichtung zur sequentiellen Zuführung von Gegenständen in eine Verarbeitung**
Apparatus and method for feeding sequentially objects during their processing
Dispositif et procédé pour l'amenée séquentielle d'objets en cours de façonnage

(30) Priorität: 15.10.2001 CH 18952001
(43) Veröffentlichungstag der Anmeldung: 16.04.2003
(73) Patentinhaber: Ferag AG, 8340 Hinwil (CH)
(72) Erfinder: Seiler, Rico, 8645 Jona SG (CH)
(74) Vertreter: Frei, Alexandra Sarah

(56) Entgegenhaltungen:
- EP-A- 0 511 159
- WO-A-98/03347

## Beschreibung

Die Erfindung liegt im Gebiete der Stückgut-Verarbeitung und betrifft ein Verfahren und eine Vorrichtung nach den Oberbegriffen der entsprechenden, unabhängigen Patentansprüche. Verfahren und Vorrichtung dienen zur sequentiellen Zuführung einer grossen Zahl von Gegenständen in eine Verarbeitung, das heisst zur Zuförderung der Gegenstände zu einer Verarbeitungsvorrichtung und zur Abgabe der Gegenstände in die Verarbeitung.

Die sequentielle Zuführung von Gegenständen in eine Verarbeitung ist dann sowohl bezüglich Vorrichtung als auch bezüglich Steuerung sehr einfach, wenn die Verarbeitung durchwegs regelmässig getaktet betreibbar ist. Zuführung und Verarbeitung werden in einem solchen Falle vorteilhafterweise durch einen gemeinsamen Antrieb oder eine gemeinsame Steuerung fest miteinander gekoppelt, derart, dass Leistungsschwankungen in der Verarbeitung (Zahl der verarbeitbaren Gegenstände pro Zeiteinheit) sich ohne Verzögerung auf die Zuführung übertragen. Derart fest gekoppelte Systeme sind nur anwendbar, wenn die Gegenstände für die Zuführung aus einem Reservoir bezogen werden (z.B. off-line Zuführung aus einer Lagerformation) und die Entnahme von Gegenständen aus dem Reservoir verzögerungsfrei an Schwankungen in der Verarbeitungsleistung angepasst werden kann.

Für eine on-line Zuführung, das heisst für eine Zuführung, die die Gegenstände on-line beispielsweise direkt von einer Herstellungsvorrichtung bezieht, ist das oben beschriebene System mit fest gekoppelter Zuführung und Verarbeitung nicht vorteilhaft, wenn Leistungsschwankungen in der Verarbeitung zu erwarten sind und wenn die Lieferkapazität nicht oder nur mit Verzögerungen an eine momentane Verarbeitungskapazität angepasst werden kann.

Um die genannten Nachteile von durch einen Systemtakt gekoppelten Zuführungs-Verarbeitungs-Systemen, wie sie oben kurz beschrieben sind, zu vermeiden, kann die Zuführung eine Ausschleusweiche aufweisen, mit der zugeführte Gegenstände für deren Verarbeitung keine Verarbeitungskapazität vorhanden ist, aus dem System ausgeschleust werden. Damit das System auch auf unvorhersehbare Reduktionen der Verarbeitungskapazität reagieren kann, werden die Gegenstände unmittelbar vor der Verarbeitung ausgeschleust. Zuführungen mit einer derartigen Ausschleusung können auch bei variierender Verarbeitungsleistung regelmässig getaktet betrieben werden und sind aus diesem Grunde auch für eine Zuführung mittels gehaltener Förderung vorrichtungsmässig relativ einfach realisierbar, beispielsweise mit Hilfe von umlaufenden Greiferketten, an denen die Greifer mit regelmässigen Abständen voneinander angeordnet sind und die mit im wesentlichen konstanter Geschwindigkeit angetrieben werden. Wenn die Verarbeitungsleistung aber stark oder über längere Zeit unter der Zuführungsleistung liegt, fällt eine grosse Zahl von ausgeschleusten Gegenständen an, die verworfen oder an einer geeigneten Stelle und zu einem geeigneten Zeitpunkt meist in manueller Arbeit wieder in das System eingespeist werden müssen.

Eine als Folge einer reduzierten Verarbeitungskapazität durchzuführenden Ausschleusung von nicht verarbeitbaren aber zugeführten Gegenständen aus dem System wird gemäss dem Stande der Technik beispielsweise verhindert, indem für die ausgeschleusten Gegenstände eine weitere Verarbeitungsvorrichtung zur Verfügung gestellt wird. Diese Vorrichtung stellt einen hohen Zusatzaufwand dar und die Ausnützung dieser Vorrichtung ist in vielen Fällen sehr gering.

Eleganter aber vorrichtungsmässig meist noch aufwendiger wird dasselbe Problem gelöst, wenn die Zuführung nicht streng getaktet betrieben wird sondern eine Pufferstrecke aufweist, wobei die Pufferstrecke für eine Entkoppelung der Lieferung der Gegenstände (z.B. on-line aus Herstellung oder off-line ab Reservoir) und der Abgabe der Gegenstände in die Verarbeitung sorgt und dadurch auch bei konstanter Lieferleistung Schwankungen in der Verarbeitungsleistung oder Verzögerungen in der Anpassung der Lieferungsleistung an eine variierende Verarbeitungsleistung in vorgegebenem Rahmen (Pufferkapazität) aufnehmen kann. Pufferstrecken verlangen aber eine Förderung mit variierenden Abständen zwischen den Gegenständen, was für eine lose aufliegende Förderung zwar vorrichtungsmässig relativ einfach realisierbar ist, für eine gehaltene Förderung aber voneinander unabhängig förderbare Halteelemente, also recht aufwendige Fördersysteme bedingt.

Ein Beispiel, an dem die oben kurz beschriebenen Probleme und Schwierigkeiten einfach illustriert werden können, ist die Stapelung und Paketierung von Druckprodukten, die beispielsweise in einer Rotation produziert und zwischen Rotation und Stapelung/Paketierung durch Zugabe von Teilprodukten, Beilagen und/oder anderen Produkten komplettiert werden. Stapelung und Paketierung können nur regelmässig getaktet durchgeführt werden, wenn alle zu erstellenden Pakete gleich gross sind. Werden aber für einzelne Destinationen vorgegebene Zahlen von Druckprodukten in Gruppen von maximal grossen Normpaketen und kleineren Spitzenpaketen verpackt, sinkt die Stapel- und Packleistung (in Druckprodukten pro Zeiteinheit) bei der Produktion von Spitzenpaketen gegenüber der Produktion von Normpaketen. Da eine Anpassung der Rotationsleistung für diesen Fall völlig sinnlos wäre, wird in den meisten Fällen eine spezielle Einrichtung für die Produktion der Spitzenpakete vorgesehen und werden die für die Spitzenpakete vorgesehenen Druckprodukte an der Stapelvorrichtung für die Normpakete vorbei dieser zusätzlichen Vorrichtung zugeführt. Da handelsübliche Stapel- und Paketiervorrichtungen üblicherweise ohne weiteres sowohl Normpakete als auch Spitzenpakete produzieren können und da die Spitzenpakete nur einen kleinen Teil des Gesamtvolumens ausmachen, wäre es wünschenswert, wenn die zusätzliche, wenig ausgelastete Vorrichtung zur Herstellung der Spitzenpakete eingespart werden könnte, insbesondere dann, wenn dies möglich wäre ohne Pufferstrecke vor der Stapelung, ohne eine erhöhte Komplexität der ganzen Anlage und insbesondere ohne Ausschleusung von komplettierten Druckprodukten vor der Stapelung, denn diese komplettierten Druckprodukte müssen für eine Rückführung in das System wieder in ihre Bestandteile zerlegt werden.

Insbesondere, um den oben genannten Wunsch aus der Druckereibranche erfüllen zu können, stellt sich die Erfindung die Aufgabe, ein Verfahren und eine Vorrichtung zur sequentiellen Zuführung von beispielsweise on-line zugelieferten (z.B. Rotation) Gegenständen (z.B. Druckprodukte) in eine Verarbeitung (z.B. Stapelung und Paketierung) zu schaffen, mit denen es möglich wird, in einfachster Weise temporäre Reduktionen der Verarbeitungsleistung ohne Beeinflussung der Lieferleistung aufzunehmen und zwar ohne Pufferstrecke und ohne zusätzliche Verarbeitungsvorrichtungen. Die erfindungsgemässe Vorrichtung soll einfach sein, soll also insbesondere mit Fördermitteln realisiert werden können, die alle nur in einem strengen Taktregime betreibbar sind.

Verfahren und Vorrichtung gemäss Erfindung sollen insbesondere vorteilhaft anwendbar sein für das bereits weiter oben beschriebene Beispiel der Produktion von Druckprodukten mit on-line Komplettierung und Stapelung/Paketierung zu Norm-und Spitzenpaketen. Die Erfindung soll aber in keiner Weise auf dieses Anwendungsbeispiel beschränkt sein.

Die oben gestellte Aufgabe wird gelöst durch das Verfahren und die Vorrichtung, wie sie in den Patentansprüchen definiert sind.

Das erfindungsgemässe Verfahren basiert auf der Idee der Ausschleusung von Gegenständen aus einem regelmässig getakteten Zuführungsstrom zur Anpassung der Zuführungsleistung an eine temporär reduzierte Verarbeitungsleistung. Die Ausschleusung findet aber nicht wie gemäss dem Stande der Technik unmittelbar bei der Übergabe der Gegenstände in die Verarbeitung statt, sondern kann beliebig stromaufwärts verschoben werden, vorteilhafterweise stromaufwärts von einer auf dem Zuführungsweg on-line durchgeführten Bearbeitung (z.B. Komplettierung) der zuzuführenden Gegenstände.

Dies wird erreicht dadurch, dass Gegenstände, die wegen mangelnder Verarbeitungskapazität nicht in die Verarbeitung abgegeben werden können, rückgeführt und stromaufwärts von der Abgabe wieder in den Zuführungsstrom eingeschleust werden. Um die Wieder-Einschleusung in den fest getakteten Zuführungsstrom zu ermöglichen, werden in diesem Strom entsprechende Lücken erzeugt, und zwar derart gesteuert, dass an der Stelle der Wieder-Einschleusung immer dann eine Lücke vorhanden ist, wenn ein rückgeführter Gegenstand einzuschleusen ist.

Auf dem Zuführungsweg, den die Gegenstände von einer Liefervorrichtung bis zur Verarbeitung zurücklegen, ist also eine Lückenerzeugungsstelle vorgesehen, eine Rückführungsstelle und am Ende des Zuführungsweges die Abgabestelle, an der Gegenstände in die Verarbeitung abgegeben oder von der aus sie gegebenenfalls auf einem Rückführungsweg zurück zur Rückführungsstelle gefördert werden. Die Lükkenerzeugungsstelle weist eine beliebige Position bei der Rückführungsstelle oder stromaufwärts davon auf, welche Position aufgrund beliebiger Kriterien wählbar ist. Die Länge des Rückführungsweges in Fördertakten richtet sich nach dem örtlichen Abstand zwischen Lückenerzeugungsstelle und Rückführungsstelle sowie nach der zeitlichen Differenz (ebenfalls in Fördertakten) zwischen Nicht-Abgabe und Lükkenerzeugung. Dabei ist ein Fördertakt zu verstehen als örtliche Einheit, nämlich als Abstand zwischen zwei hintereinander geförderten Gegenständen, als auch als eine während des Betriebes über die Fördergeschwindigkeit mit der örtlichen Einheit fest korrelierte, zeitliche Einheit.

In einem System, in dem die Gegenstände on-line zugeliefert werden, ist es vorteilhaft, die Lücken durch Ausschleusung aus dem Zuführungsstrom zu erzeugen. Wenn aber die Gegenstände für die Speisung des Zuführungsstromes aus einem Reservoir entnommen werden, kann auch der Reservoir-Ausgang entsprechend gesteuert werden.

Eine Vorrichtung zur Durchführung des erfindungsgemässen Verfahrens mit gehaltener Förderung der einzelnen Gegenstände, ist realisierbar ohne andere Fördervorrichtungen als solche, die nur regelmässig getaktet betreibbar sind (vorteilhafterweise umlaufend angetriebene Greiferketten). Vorteilhafterweise wird als Fördermittel für Zuführungsweg und Rückführungsweg zwischen Rückführungsstelle und Abgabestelle ein einziges, umlaufendes Förderorgan verwendet. An diesem Förderorgan sind in regelmässigen Abständen voneinander Haltemittel (z.B. Greifer) angeordnet, die für ein Ergreifen, eine gehaltene Förderung und ein Abgeben von je einem Gegenstand steuerbar sind.

Auf dem Zuführungsweg können die Gegenstände sowohl stromaufwärts von der Rückführungsstelle als stromabwärts davon beliebigen Bearbeitungsschritten unterzogen werden. Dabei ist es vorteilhaft, die Stelle der Lückenerzeugung stromaufwärts von jeder derartigen Bearbeitung anzuordnen und die Bearbeitung beim Auftreten von Lücken und/oder von rückgeführten Gegenständen entsprechend zu steuern. Auf diese Weise werden nur unbearbeitete Gegenstände ausgeschleust, deren Wiederverwendung im gleichen System meistens einfach und gegebenenfalls auch aus anderen Gründen bereits vorgesehen ist.

Die erfindungsgemässe Zuführung ist mit denselben, sehr einfachen Fördermitteln realisierbar wie die bekannte Zuführung, mit der bei einer Reduktion der Verarbeitungskapazität Gegenstände nicht in die Verarbeitung abgegeben und aus dem System ausgeschleust oder einer weiteren Verarbeitungsvorrichtung zugeführt werden. Gegenüber diesem bekannten Verfahren besteht der Hauptvorteil des erfindungsgemässen Verfahrens aber darin, dass die Ausschleusung (Lückenerzeugungsstelle) an einer im wesentlichen frei wählbaren Stelle im Zuführungsstrom angeordnet werden kann, vorteilhafterweise an einer Stelle, an der leicht rückführbare (beispielsweise noch nicht bearbeitete) Gegenstände ausgeschleust werden können, oder an einer Stelle, an der gegebenenfalls aus anderen Gründen sowieso Ausschleusmittel vorzusehen sind. Trotz einer gegebenenfalls weit von der Verarbeitung entfernten Ausschleusung (Lückenerzeugung) kann das System im wesentlichen verzögerungsfrei auf Reduktionen der Verarbeitungsleistung reagieren.

Für das weiter oben angeführte Anwendungsbeispiel für die Erfindung nämlich für die Stapelung und Packetierung von unmittelbar davor on-line durch Beigabe von weiteren Produkten komplettierten Druckprodukten werden die Lücken im Zuführungsstrom stromaufwärts von der Komplettierung erzeugt, wird für die Lücken die Komplettierung unterdrückt und werden zwischen Komplettierung und Abgabe in die Stapelung komplettierte Produkte, die nicht in die Stapelung abgegeben werden konnten in den Zuführungsstrom rückgeführt. Das heisst mit anderen Worten, es werden alle komplettierten Produkte von der einzigen, vorgesehenen Stapel/Packetiervorrichtung verarbeitet und als ausgeschleuste Produkte fallen nur solche an, die noch nicht komplettiert sind und die dadurch ohne weiteren Aufwand zu einem geeigneten Zeitpunkt in das Verfahren zurückgeschleust werden können.

Verfahren und Vorrichtung gemäss Erfindung und das bereits weiter oben skizzierte Anwendungsbeispiel (Rotation-Komplettierung-Packetierung von Druckprodukten) werden anhand der folgenden Figuren im Detail beschrieben. Dabei zeigen:
**Figuren 1 und 2** zwei einfache Verfahrensschemas zur Erläuterung des erfindungsgemässen Verfahrens;
**Figur 3** ein Grundrissschema des genannten Anwendungsbeispiels;
**Figuren 4, 5 und 6** drei etwas detaillierter dargestellte Schnitte durch das Schema gemäss Figur 3 (Schnittlinien IV-IV, V-V und VI-VI).

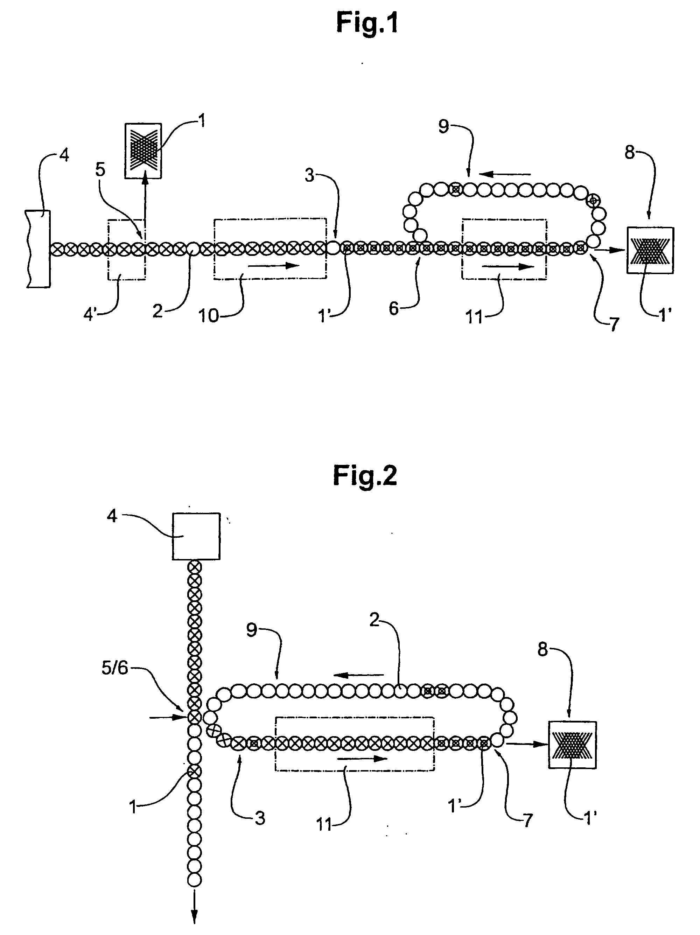

**Figuren 1 und 2** zeigen in einer sehr schematischen Art und Weise das erfindungsgemässe Verfahren zur sequentiellen Zuführung von Gegenständen 1 (als Kreuze dargestellt) in eine Verarbeitung, für welche Zuführung die Gegenstände 1 regelmässig getaktet und gehalten entlang eines Zuführungsweges gefördert werden. Die regelmässig getaktete Förderung entlang von Förderwegen ist in den Figuren 1 und 2 als Reihe von Kreisen dargestellt, wobei geförderte Gegenstände 1 durch mit einem Kreuz gefüllte Kreise (gegebenenfalls bearbeitete Gegenstände 1' mit zusätzlichem, kleinem Kreis) und Lücken 2 durch leere Kreise dargestellt sind. Jeder Kreis stellt ferner einen Fördertakt dar.

Der Zuführungsweg 3 führt von einer Liefervorrichtung 4, aus der der Zuführungsstrom gespeist wird, über die Lückenerzeugungsstelle 5, an der im Zuführungsstrom Lücken 2 erzeugt werden, zur Rückführungsstelle 6, an der nicht in die Verarbeitung abgegebene, gegebenenfalls bearbeitete Gegenstände 1' in den Zuführungsstrom zurückgeschleust werden, und von da zur Abgabestelle 7, an der die gegebenenfalls bearbeiteten Gegenstände 1' in die Verarbeitung 8 abgegeben oder rückgeführt werden. Von der Abgabestelle 7 führt der Rückführungsweg 9, auf dem nicht abgegebene, gegebenenfalls bearbeitete Gegenstände 1' rückgeführt werden, zurück zur Rückführungsstelle 6. Vor der Abgabestelle 7 oder an der Abgabestelle 7 können ferner fehlerhafte Gegenstände ausgeschleust werden (nicht dargestellt).

Für eine zur on-line Einspeisung der Gegenstände 1 in den Zuführungsstrom ausgerüstete Liefervorrichtung 4, liegt die Lückenerzeugungsstelle 5 stromabwärts von der Liefervorrichtung und die Lücken 2 werden durch Ausschleusung von (noch nicht bearbeiteten) Gegenständen 1 aus dem Zuführungsstrom erzeugt. Für eine als Reservoir ausgestaltete Liefervorrichtung 4' ist es vorteilhaft, die Lückenerzeugungsstelle 5 unmittelbar am Reservoirausgang vorzusehen, das heisst, die Entnahme von Gegenständen aus dem Reservoir entsprechend zu steuern.

Damit in der Rückführungsstelle 6 auf dem Zuführungsweg 3 ankommende Lücken 2 und auf dem Rückführungsweg 9 ankommende, nicht abgegebene Gegenstände 1' geordnet aufeinandertreffen, sind die Länge (in Fördertakten) des Zuführungsweges 3 zwischen Lückenerzeugungsstelle 5 und Rückführungsstelle 6, die Länge (in Fördertakten) des Rückführungsweges 9 und die zeitliche Differenz (in Fördertakten) zwischen Nicht-Abgabe eines Gegenstandes 1' und Erzeugung einer entsprechenden Lücke 2 im Zuführungsstrom entsprechend aufeinander abzustimmen. Diese Abstimmung kann in verschiedener Weise an verschiedene äussere Bedingungen angepasst werden, wie dies in den Figuren 1 und 2 dargestellt ist.

**Figur 1** zeigt ein System, in dem die Gegenstände 1 zwischen Liefervorrichtung 4 oder 4' in einer Bearbeitungsvorrichtung 10 bearbeitet (z.B. komplettiert) werden sollen und in der keine bearbeiteten Gegenstände 1' ausgeschleust werden sollen. Aus diesem Grunde ist die Lückenerzeugungsstelle 5 stromaufwärts von der Bearbeitungsvorrichtung 10 angeordnet. Der Rückführungsweg 9 und der Zuführungsweg 3 von der Rückführungsstelle 6 bis zur Abgabestelle 7 werden vorteilhafterweise von einem einzigen, umlaufenden Transportorgan bedient, dem die Gegenstände 1' des Zuführungsstromes an der Rückführungsstelle 6 von einem anderen Transportorgan übergeben werden.

Die Länge des Zuführungsweges 3 zwischen Lückenerzeugungsstelle 5 und Rückführungsstelle 6 ist im wesentlichen vorgegeben durch die Bearbeitungsvorrichtung 10. Bei einer gegenüber einer Nicht-Abgabe eines Gegenstandes an der Abgabestelle 7 ohne Verzögerung durchgeführten Lückenerzeugung ist der Rückführungsweg 9 gleich lang auszulegen wie der Zuführungsweg von der Lückenerzeugungsstelle 5 zur Rückführungsstelle 6. Eine Verzögerung zwischen Nicht-Abgabe und Lückenerzeugung bedingt eine entsprechende Verlängerung des Rückführungsweges 9. Wenn die Nicht-Abgabe vor Ankunft des entsprechenden Gegenstandes an der Abgabestelle 7 entschieden wird, kann die Lückenerzeugung vorzeitig eingeleitet (negative Verzögerung) und dadurch der Rückführungsweg 9 entsprechend kürzer ausgelegt werden.

Die Bearbeitungsvorrichtung 10 ist derart zu steuern, dass Bearbeitungsschritte im Falle von Lücken 2 im Zuführungsstrom ausgesetzt werden. Zusätzlich zu einer Bearbeitungsvorrichtung 10 zwischen Lückenerzeugungsstelle 5 und Rückführungsstelle 6 kann auch eine weitere Bearbeitungsvorrichtung 11 zwischen Rückführungsstelle 6 und Abgabestelle 7 vorgesehen werden. Diese Vorrichtung 11 ist derart zu steuern, dass die Bearbeitung für rückgeführte Gegenstände ausgesetzt wird.

**Figur 2** zeigt ein System, das nur eine weitere Bearbeitungsvorrichtung 11 zwischen Rückführungsstelle 6 und Abgabestelle 7 aufweist. Aus diesem Grunde kann die Länge des Zuführungsweges 3 zwischen der Lückenerzeugungsstelle und der Abgabestelle 7 beliebig verkürzt, beispielsweise wie dargestellt ganz weggelassen werden. Das bedeutet, dass die Lückenerzeugungsstelle 5 und die Rückführungsstelle 6 zusammenfallen, dass also an dieser Stelle 5/6 immer dann ein Gegenstand ausgeschleust wird, wenn auf dem Rückführungsweg 9 ein Gegenstand ankommt. Auch in diesem Falle wird der Zuführungsweg 3 von der Stelle 5/6 zur Abgabestelle 7 und der Rückführungsweg 9 vorteilhafterweise von einem einzigen, umlaufenden Förderorgan bedient. Für den Zuführungsweg 3 stromaufwärts von der Stelle 5/6 ist ein weiteres Förderorgan vorgesehen, das den Zuführungsstrom an der Stelle 5/6 übergibt und auszuschleusende Gegenstände 1 weiter fördert.

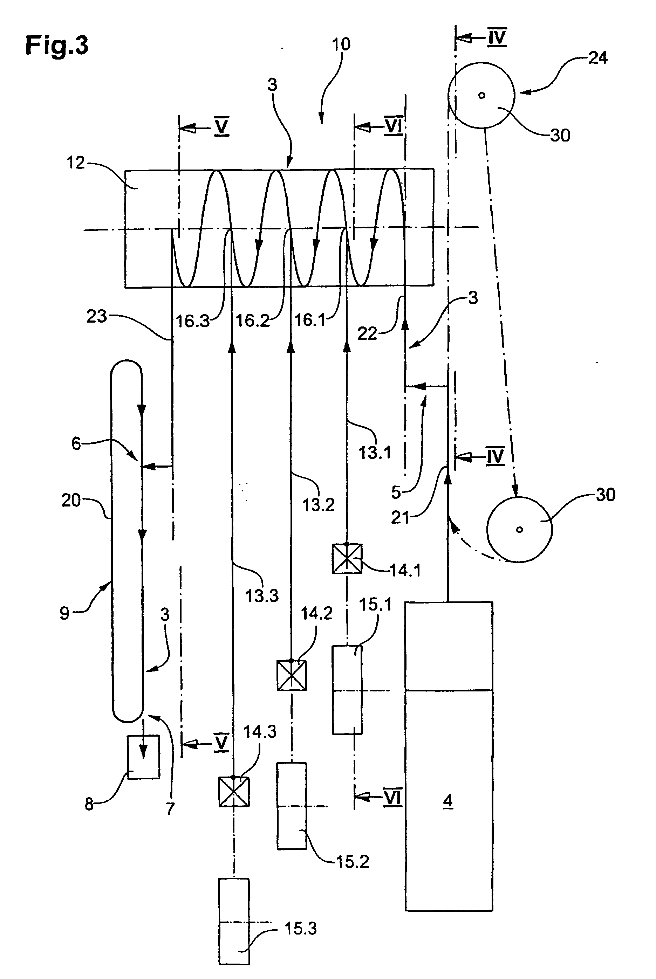

**Figur 3** zeigt als Draufsicht eine Einrichtung, mit der Hauptprodukte von Druckprodukten (z.B. Zeitungen), die aus einer Rotation (Liefervorrichtung 4) on-line zugeliefert werden, in einer Komplettiervorrichtung 12 (Bearbeitungsvorrichtung 10 wie in Figur 1), z.B. in einer Einstecktrommel, komplettiert und von da einer Stapelung und Paketierung (Verarbeitungsvorrichtung 8) zugeführt werden. Eine wie in der Figur 1 dargestellte, weitere Bearbeitungsvorrichtung 11 zwischen Rückführungsstelle 6 und Abgabestelle 7 ist in der Einrichtung gemäss Figur 3 nicht vorgesehen. Der Komplettiervorrichtung 10 werden mit Hilfe von beispielsweise drei Teilzuführungen 13.1 bis 13.3 Teilprodukte (oder Beilagen, andere Gegenstände etc.) ab Anlegern 14.1 bis 14.3 und/oder Wickelstationen 15.1 bis 15.3 zugeführt. Die Einrichtung entspricht in ihren wesentlichen Zügen dem Schema der Figur 1. Gleiche Funktionseinheiten sind denn auch mit gleichen Bezugsziffern bezeichnet.

Der Zuführungsweg 3, der in der Figur 3 mit einer fetten Linie dargestellt ist, führt also von der Liefervorrichtung 4 zur Komplettiervorrichtung 12, beispielsweise spiralförmig durch die Komplettiervorrichtung 12 an den Teilzuführungsstellen 16.1 bis 16.3 vorbei und von der Komplettiervorrichtung 12 zur Verarbeitungsvorrichtung 8. Die Lückenerzeugungsstelle 5 ist vor der Komplettiervorrichtung 12, die Rückführungsstelle 6 nach der Komplettiervorrichtung 12 angeordnet.

Der Rückführungsweg 9 ist zusammen mit dem Stück des Zuführungsweges 3 zwischen Rückführungsstelle 6 und Abgabestelle 7 mit einem einzigen, umlaufenden Förderer (letzter Förderer 20) realisiert, von dem an der Abgabestelle 7 komplettierte Produkte in die Stapelung abgegeben und nicht abgegebenen Produkte weiter gefördert werden und von dem an der Rückführungsstelle 6 der Zuführungsstrom übernommen wird, wobei rückgeführte Produkte in Lücken des Zuführungsstromes eingeordnet werden.

Für den Zuführungsweg 3 zwischen der Liefervorrichtung 4 und dem letzten Förderer 20 sind zusätzlich zur Komplettiervorrichtung 12 drei weitere, getaktete Förderer 21, 22 und 23 vorgesehen. Der erste Förderer 21 dient zur Förderung von der Liefervorrichtung 4 zu einer Vorrichtung 24, mit deren Hilfe aus Hauptprodukten Lagereinheiten (z.B. Wickel) erstellt werden. Ein derartiger erster Förderer 21 und eine derartige Vorrichtung 24 werden standardgemäss vorgesehen für die Produktion von Teilprodukten und Beilagen, die von der Liefervorrichtung off-line produziert und zu Lagerformationen verarbeitet werden, um später mit Hilfe der Teilzuführungen 13.1 bis 13.3 in die Komplettiervorrichtung 12 zugeführt zu werden. Für die on-line Produktion von Hauptprodukten wird der Zuführungsstrom vom ersten Förderer 21 in der Lückenerzeugungsstelle 5 an den zweiten Förderer 22 übergeben und werden nur Hauptprodukte mit dem ersten Förderer 21 weiter gefördert, die zur Erzeugung einer Lücke aus dem Zuführungsstrom auszuschleusen sind. Diese ausgeschleusten Hauptprodukte werden zu Lagerformationen 30 verarbeitet, die beispielsweise nach Abschluss der Rotations-Produktion oder während eines Unterbruches der Komplettierung zugeführt werden können. Der zweite Förderer 22 führt die Hauptprodukte in die Komplettiervorrichtung 12. Der dritte Förderer 23 übernimmt die komplettierten Hauptprodukte aus der Komplettiervorrichtung 12 und führt sie dem letzten Förderer 20 zu, dem sie an der Rückführungsstelle 6 übergeben werden.

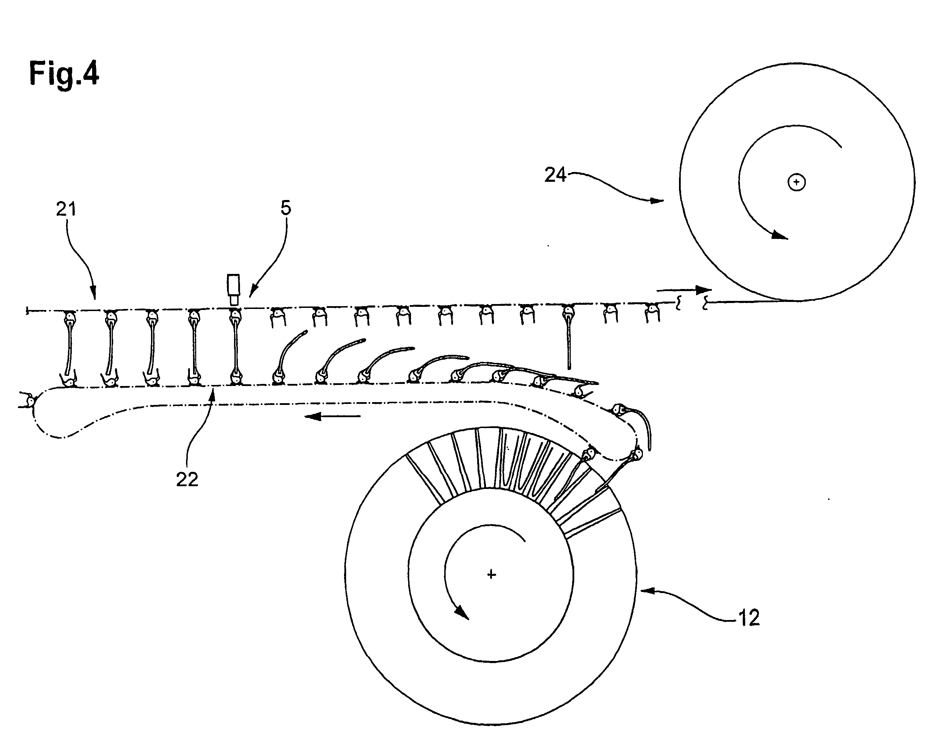

**Figuren 4 bis 6** zeigen etwas detaillierter als Figur 3 Schnitte durch die Einrichtung gemäss Figur 3 entlang der in der Figur 3 mit IV-IV, V-V und VI-VI bezeichneten Schnittlinien.

**Figur 4** zeigt den als Greiferkette ausgebildeten ersten Förderer 21, den ebenfalls als Greiferkette ausgebildeten zweiten Förderer 22, die als Trommel ausgebildete Komplettiervorrichtung 12 und die Vorrichtung 24 zur Herstellung von Lagereinheiten (z.B. Wickel) aus aus dem Zuführungsstrom ausgeschleusten Hauptprodukten.

Der Zuführungsstrom wird an der Lückenerzeugungsstelle 5 vom ersten Förderer 21 an den zweiten Förderer 22 übergeben, wobei zur Erzeugung von Lücken selektiv Hauptprodukte nicht übergeben sondern durch den ersten Förderer 21 zur Vorrichtung 24 weiter gefördert werden. Der zweite Förderer 22 fördert den Zuführungsstrom weiter und übergibt ihn an die Komplettiervorrichtung 12.

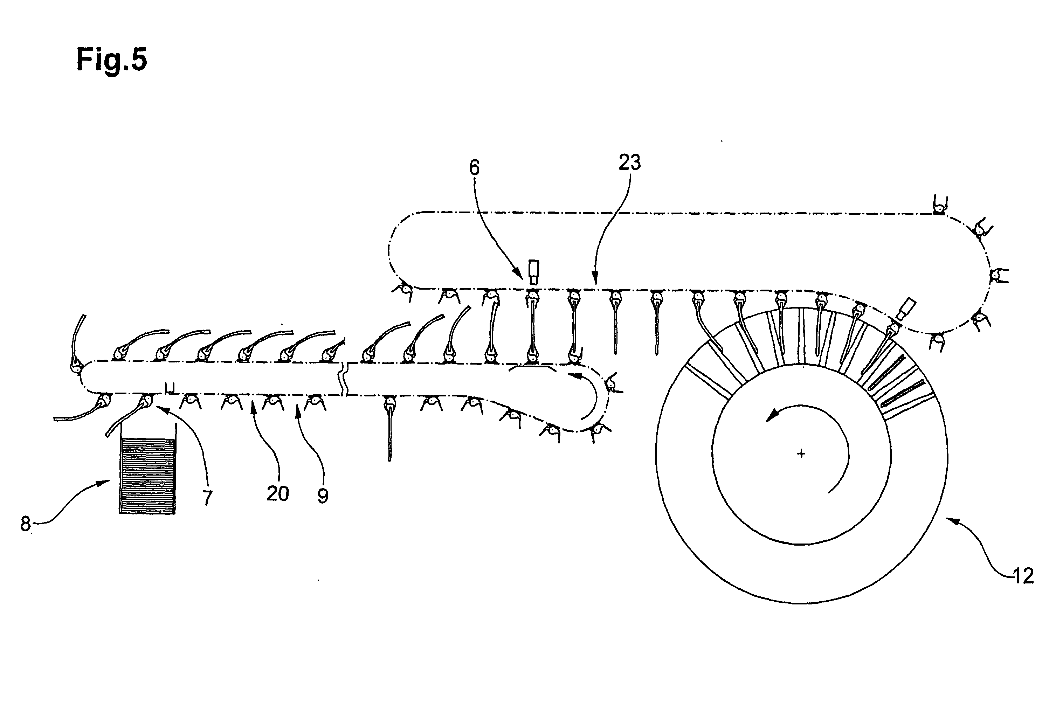

**Figur 5** zeigt den als Greiferkette ausgestalteten, dritten Förderer 23, der den Zuführungsstrom der nun komplettierten Hauptprodukte aus der Komplettiervorrichtung 12 übernimmt und an der Rückführungsstelle 6 an den letzten Förderer 20 übergibt. Der letzte Förderer 20 fördert die Produkte von der Rückführungsstelle 6 zur Abgabestelle 7 und gibt sie dort an die Verarbeitungsvorrichtung 8 ab. Bei mangelnder Verarbeitungskapazität werden Produkte an der Abgabestelle 7 nicht abgegeben sondern vom letzten Förderer 20 zurück zur Rückführungsstelle 6 gefördert und dort in eine Lücke des Zuführungsstromes eingeschleust.

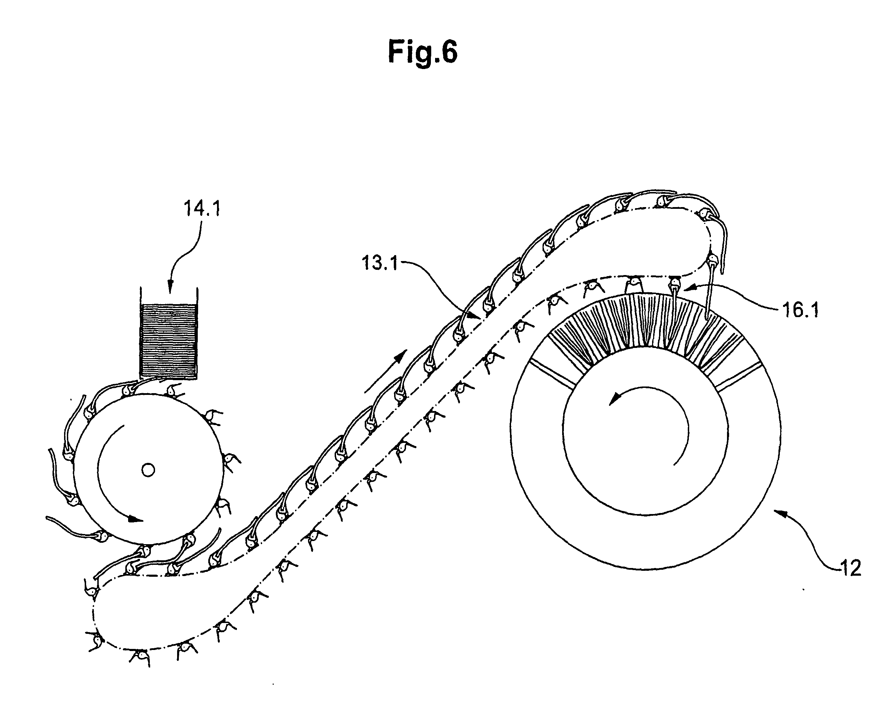

**Figur 6** zeigt die erste der Teilzuführungen 13.1 von Anleger 14.1 in die Komplettiervorrichtung 12. Diese Teilzuführung ist in an sich bekannter Weise als Greiferkette ausgestaltet, die die Teilprodukte vom Anleger 14.1 übernimmt und der Komplettiervorrichtung 12 an der Teilzuführungsstelle 16.1 übergibt. Damit in einfacher Weise die Komplettierung für eine Lücke im Zuführungsstrom der Hauptprodukte unterbunden werden kann, wird der Abstand in Fördertakten zwischen der Übernahme der Produkte durch die Teilzuführung 13.1 und der Teilzuführungsstelle 16.1 derart gewählt, dass sie der Distanz zwischen der Lückenerzeugungsstelle (5 in Figur 3) und der Teilzuführungsstelle 16.1 entspricht und wird die Lücke im Hauptproduktestrom gleichzeitig erzeugt wie die entsprechende Lücke im Teilproduktestrom. Je weiter stromabwärts also eine Teilzuführung in den Hauptproduktestrom mündet, desto länger ist der Teilzuführungsweg zwischen Anleger 14.1 und Komplettiervorrichtung 12, wie dies in der Figur 3 angedeutet ist.

Aus den Figuren 3 bis 6 wird deutlich, dass eine Einrichtung zum Komplettieren und Stapeln/Paketieren von direkt ab Rotation gelieferten Hauptprodukten mit einer Hauptprodukte-Zuführung nach dem erfindungsgemässen Verfahren mit nur gleichmässig getaktet betriebenen, einfachen Fördermitteln (z.B. mit im wesentlichen konstanter Geschwindigkeit betriebene, umlaufende Greiferketten) realisiert werden kann, dass trotzdem als ausgeschleuste Produkte nur einfach wieder in den Prozess zurückführbare Hauptprodukte anfallen und dass trotzdem die Reduktion der Stapel/Paketierkapazität einer einzigen Stapel/Paketiervorrichtung bei der Herstellung von Spitzenpaketen problemlos aufgenommen werden kann.

## Patentansprüche

1. Verfahren zur sequentiellen Zuführung von Gegenständen (1) in einem regelmässig getakteten Zuführungsstrom entlang eines Zuführungsweges (3) von einer Liefervorrichtung (4) zu einer Verarbeitungsvorrichtung (8), wobei bei vorhandener Verarbeitungskapazität zugeführte Gegenstände (1) an einer Abgabestelle (7) in die Verarbeitungsvorrichtung (8) abgegeben werden und bei fehlender Verarbeitungskapazität zugeführte Gegenstände (1) nicht abgegeben und weiter gefördert werden, **dadurch gekennzeichnet, dass** die weiter geförderten Gegenstände (1) entlang eines Rückführungsweges (9) an eine Rückführungsstelle (6) stromaufwärts von der Abgabestelle (7) gefördert und dort wieder in den Zuführungsstrom eingeschleust werden und dass für jede derartige Einschleusung an einer Lückenerzeugungsstelle (5) auf dem Zuführungsweg (3) stromaufwärts von der Rückführungsstelle (6) oder an der Rückführungsstelle (6) im Zuführungsstrom je eine Lücke (2) erzeugt wird.

2. Verfahren nach Anspruch 1, **dadurch gekennzeichnet, dass** rückgeführte Gegenstände (1) und Lücken (2) synchronisiert werden durch eine Abstimmung der Länge in Fördertakten des Rückführungsweges (9) von der Abgabestelle (7) zur Rückführungsstelle (6), der Länge in Fördertakten eines Teils des Zuführungsweges (3) von der Lückenerzeugungsstelle (5) zur Rückführungsstelle (7) und der zeitlichen Differenz in Fördertakten zwischen Nicht-Abgabe an der Abgabestelle (8) und Lückenerzeugung an der Lückenerzeugungsstelle (5).

3. Verfahren nach Anspruch 1 oder 2, **dadurch gekennzeichnet, dass** die Lücken (2) durch Ausschleusen von Gegenständen (1) aus dem Zuführungsstrom erzeugt werden.

4. Verfahren nach einem der Ansprüche 1 bis 3, **dadurch gekennzeichnet, dass** die Gegenstände (1) auf dem Zuführungsweg (3) zwischen Lückenerzeugungsstelle (5) und Rückführungsstelle (6) bearbeitet werden und dass die Bearbeitung für eine Lücke (2) ausgesetzt wird.

5. Verfahren nach einem der Ansprüche 1 bis 4, **dadurch gekennzeichnet, dass** die Gegenstände (1) auf dem Zuführungsweg (3) zwischen der Rückführungsstelle (6) und der Abgabestelle (7) bearbeitet werden und dass die Bearbeitung für rückgeführte Gegenstände ausgesetzt wird.

6. Verfahren nach einem der Ansprüche 4 oder 5, **dadurch gekennzeichnet, dass** die Gegenstände (1) von der Liefervorrichtung (4) on-line zugeführte Hauptprodukte sind, dass diese Hauptprodukte zwischen Lückenerzeugungsstelle (5) und Rückführungsstelle (6) in einer Komplettiervorrichtung (12) mit je einer Mehrzahl von Teilprodukten komplettiert werden und dass die komplettierten Hauptprodukte in der Verarbeitungsvorrichtung (8) zu Norm- und Spitzenpaketen gestapelt und stapelweise verpackt werden.

7. Verfahren nach Anspruch 6, **dadurch gekennzeichnet, dass** die Teilprodukte der Komplettiervorrichtung (12) mit einer Mehrzahl von Teilprodukteströmen zugeführt werden und dass in diesen Teilprodukteströmen Lücken erzeugt werden, die mit den Lücken (2) im Zuführungsstrom der Hauptprodukte synchronisiert sind.

8. Vorrichtung zur Zuführung von Gegenständen (1) in einem getakteten Zuführungsstrom von einer Liefervorrichtung (4) zu einer Verarbeitungsvorrichtung (8), welche Vorrichtung Zuführungsmittel für die getaktete Zuführung der Gegenstände (1) entlang eines Zuführungsweges (3) zu einer Abgabestelle (7), an der Abgabestelle (7) angeordnete Abgabemittel für die selektive Abgabe von zugeführten Gegenständen (1) an die Verarbeitungsvorrichtung (8) und Wegfördermittel für die Wegförderung von nicht abgegebenen Gegenständen (1) von der Abgabestelle (7) aufweist, **dadurch gekennzeichnet, dass** das Wegfördermittel als Rückführungsmittel für die Förderung der nicht abgegebenen Gegenstände (1) entlang eines Rückführungsweges (9) und für ihre Einschleusung an einer Rückführungsstelle (6) stromaufwärts von der Abgabestelle (7) in den Zuführungsstrom ausgerüstet ist und dass die Vorrichtung ferner ein Mittel zur Erzeugung von Lücken (2) im Zuführungsstrom an einer Lückenerzeugungsstelle (5) stromaufwärts von der Rückführungsstelle (6) oder an der Rückführungsstelle (6) aufweist.

9. Vorrichtung nach Anspruch 8, **dadurch gekennzeichnet, dass** der Rückführungsweg (9) von der Abgabestelle (7) zur Rückführungsstelle (6) in Fördertakten gleich lang ist wie der Teil des Zuführungsweges (3) von der Lückenerzeugungsstelle (5) zur Rückführungsstelle (6).

10. Vorrichtung nach Anspruch 8, **dadurch gekennzeichnet, dass** die Läge in Fördertakten des Rückführungsweges (9) sich von der Länge in Fördertakten des Teils des Zuführungsweges (3) zwischen Lückenerzeugungsstelle (5) und Rückführungsstelle (6) um eine zeitliche Verzögerung in Fördertakten zwischen einer Nicht-Abgabe an der Abgabestelle (7) und einer Lückenerzeugung voneinander verschieden sind.

11. Vorrichtung nach einem der Ansprüche 8 bis 10, **dadurch gekennzeichnet, dass** auf dem Zuführungsweg (3) zwischen Lückenerzeugungsstelle (5) und Rückführungsstelle (6) und/oder zwischen Rückführungsstelle (6) und Abgabestelle (7) eine Bearbeitungsvorrichtung (10, 11) angeordnet ist.

12. Vorrichtung nach einem der Ansprüche 8 bis 11, **dadurch gekennzeichnet, dass** für den Teil des Zuführungsweges (3) von der Rückführungsstelle (6) zur Abgabestelle (7) und für den Rückführungsweg (9) ein letzter Förderer (20) mit einem umlaufenden Förderorgan vorgesehen ist.

13. Vorrichtung nach einem der Ansprüche 8 bis 12, **dadurch gekennzeichnet, dass** die Lückenerzeugungsstelle (5) als gesteuerte Übergabe von einem ersten Förderer (21) an einen zweiten Förder (22) ausgestaltet ist, derart, dass im Zuführungsstrom verbleibende Gegenstände (1) übergeben und aus dem Zuführungsstrom auszuschleusende Gegenstände (1) weiter gefördert werden.

14. Vorrichtung nach einem der Ansprüche 12 oder 13, **dadurch gekennzeichnet, dass** die Rückführungsstelle (6) als Übergabe von einem dritten Förderer (23) an den letzten Förderer (20) ausgestaltet ist.

15. Vorrichtung nach den Ansprüchen 12, 13 und 14, **dadurch gekennzeichnet, dass** der erste Förderer (21), der zweite Förderer (22), der dritte Förderer (24) und der letzte Förderer (20) umlaufende Greiferketten sind, an denen Greifer in regelmässigen Abständen angeordnet sind.

16. Vorrichtung nach Anspruch 15, **dadurch gekennzeichnet, dass** die Liefervorrichtung (4) eine Rotation und die Verarbeitungsvorrichtung (8) eine Stapel-und Paketiervorrichtung ist und dass zwischen dem zweiten Förderer (22) und dem dritten Förderer (23) eine Komplettiervorrichtung (12) angeordnet ist.

17. Vorrichtung nach Anspruch 16, **dadurch gekennzeichnet, dass** für die Zuführung von Teilprodukten zur Komplettiervorrichtung (12) eine Mehrzahl von Teilzuführungen (13.1 bis 13.3) zu Teilzuführungsstellen (16.1 bis 16.3) vorgesehen sind, deren Länge in Fördertakten des Zuführungsweges (3) von der Lückenerzeugungsstelle (5) zur entsprechenden Teilzuführungsstelle (16.1 bis 16.3) entspricht.

## Claims

1. Method for the sequential supply of articles (1) in a regularly clocked supply stream along a supply track (3) from an article delivering device (4) to an article processing device (8), wherein supplied articles (1) are transferred to the article processing device (8) at a transfer point (7) when there is processing capacity and supplied articles (1) are not transferred but are conveyed onwards when there is no processing capacity, **characterized in that** the articles (1) being conveyed onwards are conveyed along a return track (9) to a return point (6) upstream of the transfer point (7) and there, are re-introduced into the supply stream and that, in a gap formation point (5) upstream of the return point (6) on the supply track (3) or at the return point (6), for every re-introduction of an article, a gap (2) is formed in the supply stream.

2. Method in accordance with claim 1, **characterized in that** articles (1) to be re-introduced and gaps (2) are synchronized by matching the lengths in clock cycles of the return track (9) from the transfer point (7) to the return point (6), the length in clock cycles of a part of the supply track (3) from the gap formation point (5) to the return point (7) and the time difference in clock cycles between a non-transfer at the transfer point (8) and a gap formation at the gap formation point (5).

3. Method according to claim 1 or 2, **characterized in that** the gaps (2) are formed by removing articles (1) from the supply stream.

4. Method in accordance with one of claims 1 to 3, **characterized in that** the articles (1) are further processed along the supply track (3) between the gap formation point (5) and the return point (6) and that processing is interrupted for each gap (2).

5. Method according to one of claims 1 to 4, **characterized in that** the articles (1) are further processed along the supply track (3) between the return point (6) and the transfer point (7) and that processing is interrupted for returned articles.

6. Method in accordance with one of claims 4 or 5, **characterized in that** the articles (2) are main products delivered on-line by the article delivering device (4), that between the gap formation point (5) and the transfer point (6) said main products are completed in a completing device (12) by adding to each main product a plurality of part products and that in the article processing device (8), the completed main products are stacked and packaged in normal packages and peak packages.

7. Method according to claim 6, **characterized in that** the part products are supplied to the completing device (12) in a plurality of part product streams and that gaps are produced in these part product streams, the gaps being synchronized with the gaps (2) in the supply stream of the main products.

8. Device for supplying articles (1) in a clock cycled supply stream from an article delivering device (4) to an article processing device (8), said device comprising conveying means for conveying the articles (1) in a clock cycled manner along a supply track (3) to a transfer point (7), transfer means located at the transfer point (7) for selectively transferring supplied articles (1) to the article processing device (8) and conveying-away means for conveying away articles (1) not transferred at the transfer point (7), **characterized in that** the conveying-away means is equipped as return means for conveying the not transferred articles (1) along a return track (9) and for re-introducing the returned articles (1) into the supply stream at a return point (6) upstream of the transfer point (7) and that the device further comprises means for forming gaps (2) in the supply stream at a gap formation point (5) upstream of the return point (6) or at the return point (6).

9. Device in accordance with claim 8, **characterized in that** the length in clock cycles of return track (9) from the transfer point (7) to the return point (6) is the same as the length of the one part of the supply track (3) from the gap formation point (5) to the return point (6).

10. Device according to claim 8, **characterized in that** the length in clock cycles of the return track (9) differs from the length in clock cycles of the one part of the supply track (3) between the gap formation point (5) and the return point (6) by a time delay in clock cycles between a non-transfer at the transfer point (7) and the formation of the corresponding gap.

11. Device in accordance with one of claims 8 to 10, **characterized in that** a further processing device (10, 11) is situated along the supply track (3) between the gap formation point (5) and the return point (6) and/or between the return point (6) and the transfer point (7).

12. Device according to one of claims 8 to 11, **characterized in that** for the one part of the supply track (3) from the return point (6) to the transfer point (7) and for the return track (9) a last conveyor (20) with a circulating conveying organ is provided.

13. Device in accordance with one of claims 8 to 12, **characterized in that** the gap formation point (5) is designed as a controlled transfer from a first conveyor (21) to a second conveyor (22) such, that articles (1) remaining in the supply stream are transferred and articles (1) to be removed from the supply stream are conveyed onwards.

14. Device according to one of claims 12 or 13, **characterized in that** the return point (6) is designed as a transfer point from a third conveyor (23) to the last conveyor (20).

15. Device in accordance with claims 12, 13 and 14, **characterized in that** the first conveyor (21), the second conveyor (22), the third conveyor (24) and the last conveyor (20) are circulating gripper chains, on which grippers are arranged at regular distances between one another.

16. Device according to claim 15, **characterized in that** the article delivering device (4) is a web-fed printing press and the article processing device (8) is a stacking/packaging device and that a completion device (12) is situated between the second conveyor (22) and the third conveyor (23).

17. Device in accordance with claim 16, **characterized in that** for supplying part products to the completion device (12), a plurality of part supply systems (13.1 to 13.3) to part supply points (16.1 to 16.3) are provided, the length in clock cycles of which corresponds to the length of the supply track (3) from the gap formation point (5) to the corresponding part supply point (16.1 to 16.3).

## Revendications

1. Procédé d'acheminement séquentiel d'objets (1) dans un flux d'acheminement en cycle régulier le long d'une voie d'acheminement (3) à partir d'un dispositif de livraison (4) vers un dispositif de traitement (8), sachant que, s'il existe une capacité de traitement, les objets (1) acheminés sont distribués dans le dispositif de traitement (8) au niveau d'un poste de distribution (7) et, s'il n'existe pas de capacité de traitement, les objets (1) acheminés ne sont pas distribués et continuent d'être transportés, **caractérisé en ce que** les objets (1) qui continuent à être transportés sont transportés le long d'une voie de retour (9) vers un poste de retour (6), situé en amont du poste de distribution (7), et sont à nouveau introduits dans le flux d'acheminement, et **en ce que**, pour chaque introduction de ce type, un intervalle (2) est généré respectivement dans le flux d'acheminement au niveau d'un poste de réalisation d'intervalles (5) sur la voie d'acheminement (3) en amont du poste de retour (6) ou au niveau du poste de retour (6).

2. Procédé selon la revendication 1, **caractérisé en ce que** les objets (1) retournés et les intervalles (2) sont synchronisés par un ajustement de la longueur en cycles de transport de la voie de retour (9), à partir du poste de distribution (7) vers le poste de retour (6), de la longueur en cycles de transport d'une partie de la voie d'acheminement (3), à partir du poste de réalisation d'intervalles (5) vers le poste de retour (7), et de la différence de temps dans les cycles de transport entre la non-distribution dans le poste de distribution (8) et la création des intervalles dans le poste de réalisation d'intervalles (5).

3. Procédé selon la revendication 1 ou 2, **caractérisé en ce que** les intervalles (2) sont générés par l'exclusion d'objets (1) hors du flux d'acheminement.

4. Procédé selon l'une quelconque des revendications 1 à 3, **caractérisé en ce que** les objets (1) sur la voie d'acheminement (3) sont traités entre le poste de réalisation d'intervalles (5) et le poste de retour (6) et **en ce que** le traitement est suspendu pour un intervalle (2).

5. Procédé selon l'une quelconque des revendications 1 à 4, **caractérisé en ce que** les objets (1) sur la voie d'acheminement (3) sont traités entre le poste de retour (6) et le poste de distribution (7) et **en ce que** le traitement est suspendu pour des objets retournés.

6. Procédé selon la revendication 4 ou 5, **caractérisé en ce que** les objets (1) sont des produits principaux acheminés en ligne à partir du dispositif de livraison (4), **en ce que** ces produits principaux, entre le poste de réalisation d'intervalles (5) et le poste de retour (6), sont complétés avec une pluralité de produits partiels dans un dispositif de parachèvement (12) et **en ce que** les produits principaux complétés sont empilés en paquets standard ou paquets de valeur et sont empaquetés sous forme empilée dans un dispositif de traitement (8).

7. Procédé selon la revendication 6, **caractérisé en ce que** les produits partiels sont acheminés vers le dispositif de parachèvement (12) avec une pluralité de flux de produits partiels et **en ce que** dans ces flux de produits partiels sont réalisés des intervalles qui sont synchronisés avec les intervalles (2) dans le flux d'acheminement des produits principaux.

8. Dispositif destiné à acheminer des objets (1) dans un flux d'acheminement par cycle à partir d'un dispositif de livraison (4) vers un dispositif de traitement (8), lequel dispositif comporte des moyens d'acheminement pour l'acheminement par cycle des objets (1) le long d'une voie d'acheminement (3) vers un poste de distribution (7), des moyens de distribution agencés au niveau du poste de distribution (7) pour la distribution sélective des objets (1) acheminés dans le dispositif de traitement (8), et des moyens d'évacuation pour l'évacuation des objets (1) non distribués par le poste de distribution (7), **caractérisé en ce que** le moyen d'évacuation est conçu sous forme de moyen de retour pour le transport des objets (1) non distribués le long d'une voie de retour (9) et pour leur introduction dans le flux d'acheminement au niveau d'un poste de retour (6), en amont du poste de distribution (7), et **en ce que** le dispositif comporte en outre un moyen destiné à générer des intervalles (2) dans le flux d'acheminement au niveau d'un poste de réalisation d'intervalles (5), en amont du poste de retour (6) ou au niveau du poste de retour (6).

9. Dispositif selon la revendication 8, **caractérisé en ce que** la voie de retour (9), à partir du poste de distribution (7) vers le poste de retour (6), a la même longueur en cycles de transport que la partie de la voie d'acheminement (3) à partir du poste de réalisation d'intervalle (5) vers le poste de retour (6).

10. Dispositif selon la revendication 8, **caractérisé en ce que** la longueur en cycles de transport de la voie de retour (9) est différente de la longueur en cycles de transport de la partie de la voie d'acheminement (3) entre le poste de réalisation d'intervalle (5) et le poste de retour (6) pour réaliser un décalage de temps dans les cycles de transport entre une non-distribution au niveau du poste de distribution (7) et une réalisation d'intervalle.

11. Dispositif selon l'une quelconque des revendications 8 à 10, **caractérisé en ce qu'**un dispositif de traitement (10, 11) est agencé sur la voie d'acheminement (3) entre le poste de réalisation d'intervalle (5) et le poste de retour (6) et/ou entre le poste de retour (6) et le poste de distribution (7).

12. Dispositif selon l'une quelconque des revendications 8 à 11, **caractérisé en ce que**, pour la partie de la voie d'acheminement (3) à partir du poste de retour (6) vers le poste de distribution (7) et pour la voie de retour (9), il est prévu un dernier convoyeur (20) avec un organe de convoyage rotatif.

13. Dispositif selon l'une quelconque des revendications 8 à 12, **caractérisé en ce que** le poste de réalisation d'intervalles (5) est conçu sous forme de poste de transfert d'un premier convoyeur (21) vers un deuxième convoyeur (22), de manière à transférer les objets (1) restant dans le flux d'acheminement et à continuer à transporter les objets (1) à exclure hors du flux d'acheminement.

14. Dispositif selon la revendication 12 ou 13, **caractérisé en ce que** le poste de retour (6) est conçu sous forme de poste de transfert d'un troisième convoyeur (23) vers le dernier convoyeur (20).

15. Dispositif selon les revendications 12, 13 et 14, **caractérisé en ce que** le premier convoyeur (21), le deuxième convoyeur (22), le troisième convoyeur (23) et le dernier convoyeur (20) sont des chaînes continues avec des organes de préhension agencés à distances régulières.

16. Dispositif selon la revendication 15, **caractérisé en ce que** le dispositif de livraison (4) est un organe rotatif et le dispositif de traitement (8) est un dispositif d'empilage et d'empaquetage et **en ce qu'**un dispositif de parachèvement (12) est agencé entre le deuxième convoyeur (22) et le troisième convoyeur (23).

17. Dispositif selon la revendication 16, **caractérisé en ce que**, pour l'acheminement de produits partiels vers le dispositif de parachèvement (12), il est prévu une pluralité d'acheminements partiels (13.1 à 13.3) vers des postes d'acheminement partiel (16.1 à16.3) dont la longueur en cycles de transport correspond à celle de la voie d'acheminement (3) à partir du poste de réalisation d'intervalles (5) vers le poste d'acheminement partiel (16.1 à 16.3) correspondant.
